(19) Europäisches Patentamt / European Patent Office / Office européen des brevets

(11) **EP 3 893 573 B1**

(12) **EUROPEAN PATENT SPECIFICATION**

(45) Date of publication and mention of the grant of the patent:
**14.08.2024 Bulletin 2024/33**

(21) Application number: **20168689.6**

(22) Date of filing: **08.04.2020**

(51) International Patent Classification (IPC):
**H04W 72/04** $^{(2023.01)}$     **H04W 74/08** $^{(2024.01)}$

(52) Cooperative Patent Classification (CPC):
**H04W 16/14;** H04W 72/0446

(54) **METHOD AND DEVICE FOR RADIO RESOURCE ALLOCATION**

VERFAHREN UND VORRICHTUNG ZUR FUNKRESSOURCENZUWEISUNG

PROCÉDÉ ET DISPOSITIF D'ATTRIBUTION DE RESSOURCES RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.10.2021 Bulletin 2021/41**

(73) Proprietors:
• **Mitsubishi Electric R & D Centre Europe B.V.**
**1119 NS Schiphol Rijk (NL)**
Designated Contracting States:
**FR**
• **Mitsubishi Electric Corporation**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **SIBEL, Jean-Christophe**
**35708 Rennes Cedex 7 (FR)**
• **BORYSKIN, Artem**
**35708 RENNES Cedex 7 (FR)**

(74) Representative: **Cabinet Le Guen Maillet**
**3, impasse de la Vigie**
**CS 71840**
**35418 Saint-Malo Cedex (FR)**

(56) References cited:
WO-A1-2017/135998     WO-A1-2019/164328
GB-A- 2 549 739     US-A1- 2008 144 493

**EP 3 893 573 B1**

**Description**

TECHNICAL FIELD

At least one of the present embodiments generally relates to a method, a computer program product, a non-transitory information storage medium and a device for allocating a portion of radio frequency resource to a first device, more particularly in the case where said radio frequency resource is shared between said first device and at least one second device.

RELATED ART

In wireless communications coexistence problems occur when different systems operate by sharing the same communication resources, notably frequency resources. Indeed, some frequency bands, especially unlicensed frequency bands, may be overcrowded because of the deployment of multiple devices.

In the past few years, communications systems such as those operating in accordance with different radio access technologies (RAT) such as IEEE 802.11 (Wi-Fi) and Bluetooth have been increasingly deployed in the ISM unlicensed 2.4 GHz band (acronym of "Industrial, Scientific, and Medical"). The ISM band is a portion of the radio spectrum originally reserved internationally for industrial, scientific and medical (ISM) purposes other than telecommunications, e.g. microwave ovens, garage door openers, baby monitors. Despite the intent of the original allocations, in recent years the fastest-growing use of these bands has been for short-range, low power wireless communications systems. As more and more devices use the ISM band, the spectrum becomes more crowded, which in turns degrade the quality of service in this band.

The shared frequency range of the two IEEE 802.11 (Wi-Fi) and Bluetooth standards inevitably results in transmission interference and data corruption as the two protocols operate with transmission frequencies that overlap at various times during routine transmission of information. The resulting frequency overlap degrades the network performance and transmission rates in both families of devices due to a lack of ability of wireless devices which use differing protocols to coordinate their data transmissions. This problem is exacerbated as the number of wireless devices within the network increases and is further affected by the proximity in which the wireless devices are placed with respect to one another.

The same type of problems occur in the unlicensed ITS 5.9 Ghz band (acronym of "Intelligent Transport System"). Indeed, communications systems such as those operating in accordance with IEEE 802.11p, IEEE 802.11ac, C-V2X (acronym of "Cellular Vehicle to Everything"), CBTC (acronym of "Communications-Based Train Control") standards have been increasingly deployed in the ITS band.

The coexistence between devices and radio access technologies (RAT) could be handled in a number of different ways using, for example, an opportunistic random access or some collision avoidance schemes.

Opportunistic random access technologies provide a way to efficiently allocate network resources, in particular, when the number of devices sharing the same radio resource is large. Classically, a device that is willing to transmit data listens to the communication medium and begins to transmit data when it detects an available transmission window. Collision risks are limited by applying a random waiting time before effectively initiating transmission. It however does not avoid that several devices may select the same radio resource, i.e. the same frequencies, at the same time for transmitting data. Opportunistic random access technologies thus provide a good spectrum use at the cost of a performance loss, i.e. a high collision rate.

Collision avoidance techniques are thus used to avoid resource contention. These techniques attempt to eliminate situations in which multiple devices access the same radio resource at the same time. They ensure that any device in a network can transmit data without colliding with other traffic on the network.

Collision management mainly appears in networks with carrier sense multiple access (CSMA). Devices that are willing to transmit data have to listen to the channel for some time to determine whether other devices are using the shared radio resource. A device can start transmission only if a channel is sensed to be idle, otherwise, transmissions are deferred. Two main approaches have been developed in CSMA: collision detection and collision avoidance. With collision detection, transmitters creating a collision stop transmitting and defer their transmission for a random time. Collision are thus not avoided and iterations of transmissions often occur. Collision avoidance is another approach that prevents multiple devices from transmitting at the same time on the same frequency resource, by implementing a dedicated protocol based on an exchange of RTS (acronym of "Request To Send") and CTS (acronym of "Clear To Send") messages. However, such protocol implies overhead, which degrades transmission performance.

Collision avoidance techniques thus provide a good performance, i.e. low collision rate, at the cost of a poor spectrum use. Document WO2017135998 describes collision avoidance techniques.

It is thus desirable to share radio resources between devices using the same radio frequency resource, e.g. the same frequency band or channel, while maintaining both good performance and good use of the spectrum.

2

SUMMARY OF THE INVENTION

The invention is defined by the independent claims. advantageous embodiments of the invention are given in the sub claims .

BRIEF DESCRIPTION OF THE DRAWINGS

The characteristics of the invention will emerge more clearly from a reading of the following description of at least one example of embodiment, said description being produced with reference to the accompanying drawings, among which:

Fig. 1 depicts a scenario in which various embodiments may be implemented;
Fig. 2 illustrates the principles of deterministic radio frequency resource allocation between a first device and one second device that use the same radio frequency resource;
Fig. 3 illustrates the principles of deterministic radio frequency resource allocation between a first device and one second device that use the same radio frequency resource;
Fig. 4 illustrates the principles of deterministic radio frequency resource allocation between a first device and one second device that use the same radio frequency resource according to one specific embodiment;
Fig. 5 depicts a flowchart of a method for radio frequency resource allocation according to a first embodiment;
Fig. 6 depicts a database of preconfigured radio allocation patterns;
Fig. 7 depicts a flowchart of a method for radio frequency resource allocation according to a second embodiment;
Fig. 8 illustrates the principles of associating different threshold values with different spatial zones;
Fig. 9 depicts spatial zones of various forms;
Fig. 10 depicts a flowchart of a method for radio frequency resource allocation according to a third embodiment;
Fig. 11 illustrates the principles of associating different threshold values with different levels of interference signal; and
Fig. 12 illustrates schematically an example of hardware architecture of a device according to a specific embodiment.

DETAILED DESCRIPTION OF AT LEAST ONE EMBODIMENT

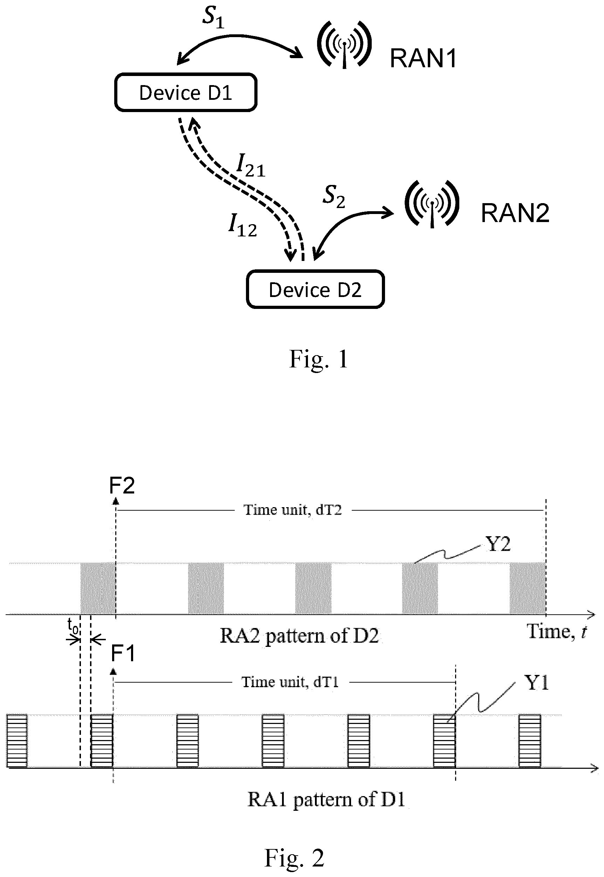

**Fig. 1** depicts a scenario in which various embodiments may be implemented. Two separate devices D1 and D2 share the same radio frequency resource, e.g. the same frequency band or channel. D1 transmits and receives data using a first radio access network denoted RAN1 and D2 transmits and receives data using a second radio access network denoted RAN2. The devices D1 and D2 are for example communication terminals.

In one embodiment, RAN1 and RAN 2 are identical and use one and the same radio access technology. As an example, the device D1 is located in a train, RAN1 is compliant with CBTC, the device D2 is located in another train and RAN2 is also compliant with CBTC.

In another embodiment, RAN 1 and RAN2 are different and use different radio access technologies. As an example, the device D1 is located in a train, RAN1 is compliant with CBTC, the device D2 is located in a vehicle such as a car and RAN2 is compliant with C-V2X. Vis versa, the device D1 is located in a vehicle such as a car, RAN1 is compliant with C-V2X, the device D2 is located in a train and RAN2 is compliant with CBTC. The train and the car are not communication terminals per se. However, they may comprise such communication terminals D1 and D2. More generally, the devices D1 and D2 may be located in vehicles with Wi-Fi connections capabilities (i.e. conforming to IEEE 802.11), smartphones (i.e. conforming to IEEE 802.11ac), vehicles with 4G/5G capabilities (i.e. conforming to C-V2X), train (conforming to CBTC), etc.

In Fig. 1, S 1 and S2 denote the average received modulated carrier power received by each device at its current location. $I_{12}$ represents the interference signal level as incurred by the device D2 and $I_{21}$ represents the interference signal level as incurred by the device D1. Thus, $I_{12}$ is representative of the impact of the transmissions of the device D1 on the transmissions of the device D2 and $I_{21}$ is representative of the impact of the transmissions of the device D2 on the transmissions of the device D1. In one embodiment, the interference signal level is understood as the signal-to-interference ratio (SIR or S/I). It is the quotient between the average received modulated carrier power S and the average received co-channel interference power, i.e. cross-talk, from other transmitters than the transmitter of the useful signal.

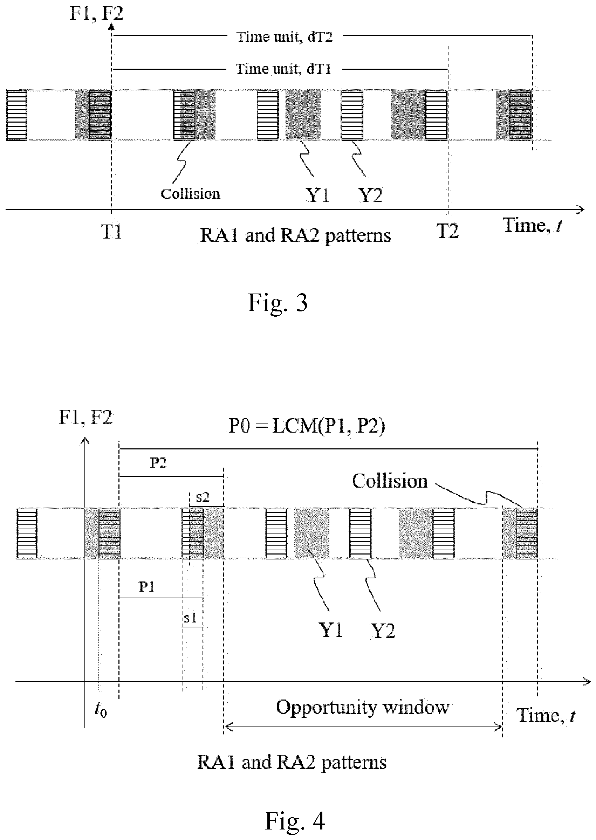

**Figs 2 and 3** illustrate the principles of deterministic radio frequency resource allocation between a first device D1 and one second device D2 that use the same radio frequency resource (RR), e.g. the same frequency band or channel, according to one specific embodiment. The frequency resource allocation (RA) for one device is defined by a RA pattern. Thus, a RA pattern defines a particular way in which frequency resource allocation occurs for a given device. In case of deterministic frequency resource allocation, the frequency resource allocation is defined by a pattern. The RA pattern can be a deterministic pattern associated with a periodic traffic comprising a sequence of identical frames as depicted in Figs. 2 and 3. Each RA pattern is thus defined as a periodic step function, namely F1(t) for device D1 and F2(t) for device D2. In Figs. 2 and 3, the hatched blocks Y1 and the gray block Y2 correspond to the time intervals used for communication by D1 and D2 respectively. The gaps between grey and hatched blocks represent time intervals during which the RR remains idle.

The time intervals dT1 and dT2 related to D1 and D2 respectively, are generally defined as follows: dTi=Pi*Ki, where i is an index identifying the device (e.g. i=0 or 1), Pi is length of the frame of Di and Ki is an arbitrary integer number selected independently by each device (e.g. K1=K2=4 as depicted on Fig. 2). Indeed, on Fig. 2, the time intervals dT1 and dT2 are defined to be equal to 4 frames. However, the number of frames in the time intervals dT1 and dT2 may be different. The difference in dT1 and dT2 results into different collision rates experienced by D1 and D2. The collision rate also depends on an offset t0 which is a time offset between RA1 and RA2. For large values of Ki, the fluctuation of the collision rate with respect to the offset t0 decreases. Each device selects the time interval, thus a Ki value, voluntary to meet its own minimum requirements. As an example, the time interval for a train may be defined as the minimum amount of time to ensure critical communications such as emergency communications, e.g.to perform train emergency break, which is typically a few seconds in urban areas (depends on train speed). For vehicle safety applications, the time interval may be shorter. An estimated collision rate is defined as the average number of collisions per interval of time, dT. Assuming that any overlap in RR usage is qualified as a collision as depicted in Fig. 3, the estimated collision rate is ¼ for D1, i.e. 25%, whereas the collision rate for D2 is 2/4, i.e. 50%. The difference is explained by the length of the frame and the value of the time interval of each device.

While deterministic patterns are illustrated in Figs 2 and 3, the embodiments also apply to a random use of radio frequency resources. In one embodiment related to random frequency resource allocation, the collision rate may be estimated based on the probability of collision between a random frequency resource allocation RA1 and any type of frequency resource allocation RA2 selected by D2, provided that it can also be interpreted in terms of an average frequency resource load. For instance, in the case where D1 usage of RR is characterized by a random frequency resource allocation with 50% channel load and D2 usage of RR is also random with 50% channel load, the estimated collision rate may be calculated as a probability of collision between the two random frequency resource allocations, which is 25% (i.e. 0.5x0.5=0.25). The same collision rate of 25% may be estimated in the case where D2 usage of RR is deterministic with a channel load of 50%.

**Fig. 4** illustrates the principles of deterministic radio frequency resource allocation between a first device D1 and one second device D2 that use the same radio frequency resource (RR), according to one specific embodiment. The elements identical to the elements of Figs 2 and 3 are identified by the same numeral references and are not further disclosed.

P1 and P2 are the periods of the RA patterns RA1 and RA2 respectively, i.e. the lengths of the frames. t0 is a time offset between RA1 and RA2. The overlap of the two periodic step functions F1(t) and F2(t) results in beating with a beat period P0 equal to the least common multiple (LCM) of P1 and P2. As illustrated in Fig. 4, the usage of two periodic step functions may lead to the formation of an "opportunity window". This "opportunity window" is repeated for each beat period P0. Provided that the device D2 communicates only during the duration of the "opportunity window", no collision occurs or an acceptable level of collision rate occurs. This type of scheduling requires time synchronization with respect to the beat period. More specifically, it requires the knowledge of the beat period P0 and the time offset t0 that can be obtained from sensing data or provided by the network e.g., a base station for trains or for vehicles if they are covered by any.

Each periodic step function may be written as follows:

$$F_1(t) = F_1(t + kP_1) = \begin{cases} 1, & kP_1 < t < kP_1 + s_1, \quad k = 0,1,\ldots \\ 0, & otherwise \end{cases} , \qquad (1)$$

$$F_2(t) = F_2(t + kP_2) = \begin{cases} 1, & kP_2 + t_0 < t < kP_2 + t_0 + s_2, \quad k = 0,1,\ldots \\ 0, & otherwise \end{cases} , \quad (2)$$

where $P_i$ is the period of the corresponding periodic step function $F_i(t)$, $s_i$ is a time interval during which the radio frequency resource is used by the corresponding device Di, and t0 is the time offset between F2(t) and F1(t).

In one embodiment, the collision rate for each device and an arbitrary selected time interval T can be estimated as:

$$C_i(T, t_0) = \int_0^T G(t)\,dt \Big/ \int_0^T F_i(t)\,dt, \qquad (3)$$

where i=1,2 for D1 and D2, respectively, and G(t) is an overlap function defined, for instance, as

$$G(t) = \begin{cases} 1, & F_1(t) = F_2(t) = 1 \\ 0, & else \end{cases} \tag{4}$$

If F1(t) and F2(t) are periodic functions, then the overlap function G(t) is also periodic with a period P0 equal to the least common multiple (LCM) of the periods of F1(t) and F2(t). In one embodiment, it may thus be beneficial to select a time interval T equal to the period of the overlap function P0, namely:

$$T = P_0 = LCM(P_1, P_2), \tag{5}$$

In one embodiment, the value T=P0 is used to calculate an asymptotic value of the collision rate based solely on the frame lengths P1 and P2.

Thanks to the periodicity of the overlap function, such a definition of T makes the collision rate function Ci invariant with respect to the time offset t0. Moreover, the value of Ci calculated for T=P0, may be considered as an asymptotic value for an arbitrary selected time interval T, provided T is much greater than P0.

On Fig. 4 the opportunity window is characterized by a zero collision rate. In other embodiments, the opportunity window may support any collision rate whose value is between 0 and $C_2$ where $C_2$ is a value of the collision rate calculated for time interval T=LCM(P1,P2).

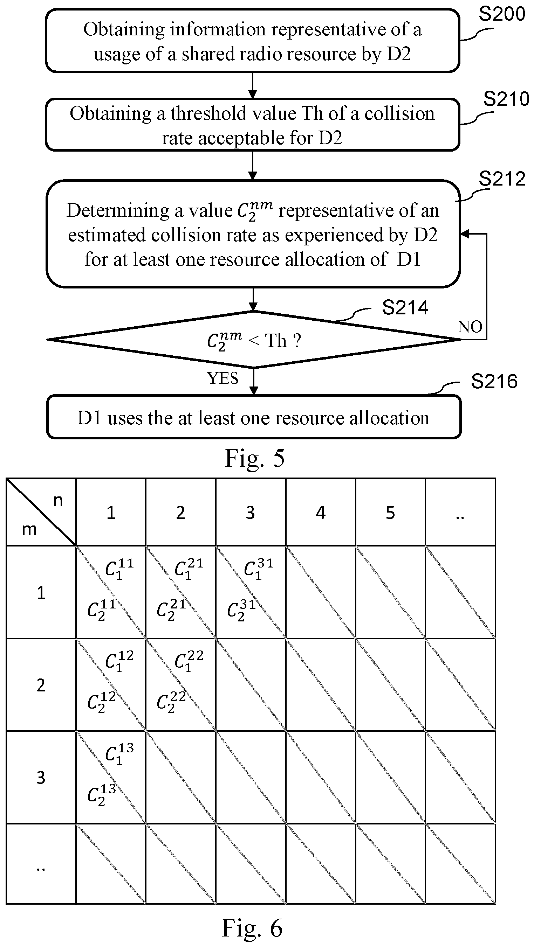

**Fig. 5** depicts a flowchart of a method for radio frequency resource allocation according to a first embodiment. More particularly, the method is for allocating a portion of a radio frequency resource to a first device, e.g. the device D1, said radio frequency resource being shared between said first device D1 and at least one second device, e.g. the device D2. The method is disclosed from the point of view of the first device D1 in Fig. 1. The first device D1 may be informed of the existence of D2 by RAN1 through the application layer. In this case, the application layers of D1 and D2 exchange information so as to inform each other of their presence in a given geographical area and of other information (see hereafter). To this aim, MEC devices (acronym of "Multi-access Edge Computing"), e.g. MEC servers may be used. Multi-access edge computing (MEC), formerly mobile edge computing, is an ETSI-defined network architecture concept that enables cloud computing capabilities and an IT service environment at the edge of the cellular network and, more in general at the edge of any network.

At step S200, the first device D1 obtains information representative of a usage of said radio frequency resource by the second device; i.e. the device D2 in Fig. 1.

In one embodiment, the information representative of a usage of said radio frequency resource by the second device D2 comprise a frequency resource allocation pattern (RA pattern) and a time interval (e.g. dT2 or P2) related to the definition of the collision rate. The information representative of a usage of the radio frequency resource by the second device D2 may be obtained by the first device D1 directly from the second device D2 through application or physical layers, by sensing or from preconfigured data defined, e.g. in factory, for example in a standard document. In one embodiment (related to a distributed use case), these preconfigured data may be extracted from the corresponding standards associated with D2 and stored in a memory of D1. Alternatively, it can be stored on a MEC device accessible through RAN1.

At step S210, the first device D1 obtains one threshold value Th of a collision rate acceptable for the second device D2. Said otherwise, if a collision rate is below the threshold value Th, it is considered as an acceptable collision rate while if it is above, it is considered as a non-acceptable collision rate. A threshold value Th is thus associated with an acceptable collision rate and is attributed to each device according to its minimum requirements in terms of interference level, e.g. SIR, to ensure a sufficient proportion of correct received packets that is determined by its own radio configuration such as its modulation and coding scheme, its waveform, its frequency allocation, etc. The threshold value Th may be obtained by the first device D1 directly from the second device D2 through their application layers. In a variant, when the devices D1 and D2 use identical radio access technology, the threshold value Th may be obtained by the first device D1 from the second device D2 through their physical layers. Indeed, in this latter case, D1 and D2 may exchange preliminary data to agree on their thresholds for the next data to come because they have common specifications at the physical layer. In another variant, the threshold value Th may be obtained by the first device D1 from the network e.g., a base station for trains or for vehicles if they are covered by any . In yet another variant, the threshold value Th may be obtained by the first device D1 from preconfigured data defined, e.g. in factory, for example in a standard document. In one embodiment (related to a distributed use case), these preconfigured data may be extracted from the corresponding standards associated with D2 and stored in a memory of D1. Alternatively, it can be stored on a MEC device accessible through RAN1.

At step S212, the first device D1 determines a value $C_2^{nm}$ representative of an estimated collision rate as experienced by the second device D2 for at least one frequency resource allocation $RA_1$ of the first device D1, where n and m identify the frequency resource allocation of D1 and D2 respectively. The value $C_2^{nm}$ is determined notably from the obtained information representative of the usage of the radio frequency resource by the second device D2. The at least one frequency resource allocation RA1 of the first device may be one frequency resource allocation selected in a list of predefined frequency resource allocations. In an embodiment, the frequency resource allocation RA1 is defined by a RA pattern such as the deterministic pattern associated with a periodic traffic comprising a sequence of identical frames as depicted in Fig. 2. The estimated collision rate $C_2^{nm}$ may thus be determined by mapping both functions F1(t) and F2(t) in order to obtain the overlaps in RR usage as illustrated in Fig. 3 or Fig. 4. In a variant, the frequency resource allocation RA1 is a random one.

At step S214, the value $C_2^{nm}$ is compared to the threshold value Th. In the case where $C_2^{nm} < \text{Th}$, the method continues at step S216. Otherwise the method continues at step S212. Another frequency resource allocation, different from $RA_1$ e.g. a different pattern, may thus be tested for the first device D1.

In a variant, the first device D1 determines a value $C_2^{nm}$ representative of an estimated collision rate from a database of preconfigured RA patterns as depicted in **Fig. 6.** In case of a time sensitive network (TSN), the database may preferably be stored in the device D1 or in a MEC device. Alternatively, for non-TSN, it can be stored in the cloud. In Fig. 6, the database provides the estimated collision rate $C_1^{nm}$ as experienced by D1 for a selected combination of two RA patterns identified by indices n and m. Thus, n identifies a RA pattern in a list of pre-selected RA patterns of D1 and m identifies a RA pattern in a list of pre-selected RA patterns of D2.

The database also provides the estimated collision rate $C_2^{nm}$ as experienced by D2 for a selected combination of two RA patterns identified by indices n and m. Such a database can be provided to at least one of the devices, e.g. the first device D1, to facilitate its frequency resource allocation. Indeed, using the database may reduce the computation time for determining a RA pattern satisfying a given threshold value Th. Indeed, the first device D1 may directly select an appropriate RA pattern from the database that satisfies the threshold value Th.

At step S216, the frequency resource allocation $RA_1$ is used for the first device D 1.

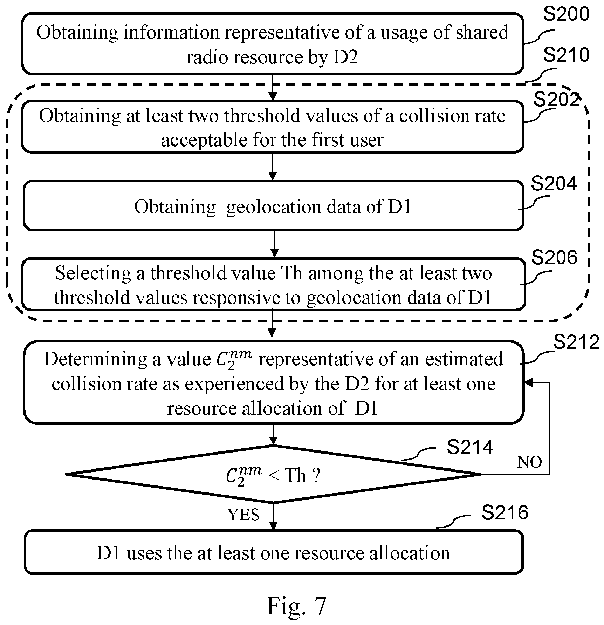

**Fig. 7** depicts a flowchart of a method for radio frequency resource allocation according to the invention. The steps identical to the step of Fig. 2 are identified by the same numeral references and are not further disclosed.

The method according to this second embodiment comprises the steps S200 to S216. In this second embodiment, the step S210 comprises several steps as depicted in Fig. 7.

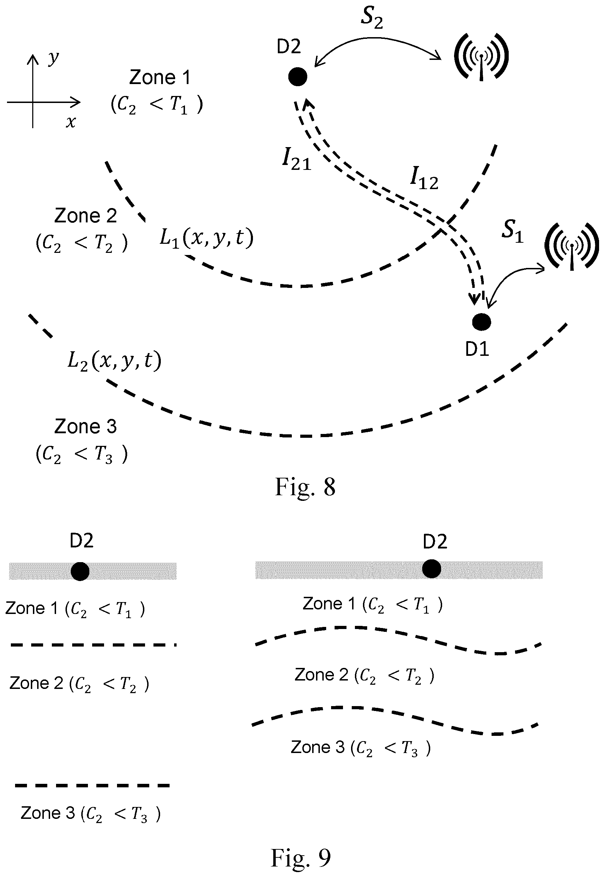

In a step S202, the first device D1 obtains at least two threshold values of a collision rate acceptable for the second device D2, each of the at least two threshold values being associated with a specific spatial zone as illustrated by Fig. 8. On Fig. 8, $C_2$ is the estimated collision rate as experienced by D2. On Fig. 8 there is no reference to specific a selected combination of two RA patterns identified by indices n and m that is why $C_2$ is used instead of $C_2^{nm}$. This embodiment is particularly well-suited in the case where the device D2 is in a train and the device D1 is in a vehicle, e.g. a car. In this case, the train (acting as D2) may predict the interference signal level from a vehicle (i.e. I12) for a worst scenario (i.e. vehicle speed, position, moving direction, antenna pattern, maximum allowed transmitted power, and propagation channel conditions) and thus define spatial zone(s) associated with different threshold values of acceptable collision rates. The threshold values and associated spatial zones may be obtained by the first device D1 directly from the second device D2, from pre-configuration data or from the network, etc (as already explained above). Said information on the threshold values can be provided by D2 in real time, e.g. by broadcasting through a physical media or through an application layer, or in advance, e.g. in a form of a time schedule linked with a geolocation map. In Fig. 8, three spatial zones are defined around the device D2. Li(x,y,t) is the outline of the i-th spatial zone associated with a threshold value denoted as Ti, (x,y) are the coordinates in a coordinate system, t is time. In Fig. 8, the spatial zones are defined by circles around D2. It will be appreciated, however, that the present embodiments are not restricted to this specific definition of the spatial zones which may have different forms as depicted in **Fig. 9.** In an exemplary embodiment, the threshold values may be associated with spatial zones, defined with respect to elements of an infrastructure (e.g. railway lines and automotive roads). Therefore, the first device D1 may obtain the three threshold values of a collision rate acceptable for the second device D2, each threshold being associated with a specific spatial zone.

In a step S204, the first device D1 obtains information representative of its own geolocation or information making it possible to determine its relative distance to D2. The obtained information is used for determining to which spatial zone the first device D1 belongs. In a variant wherein several overlapping spatial zones are defined, the first device D1 may also obtain geolocation data of the second device D2 to select an appropriate threshold value.

In a step S206, the first device D1 selects one threshold value Th among the at least two threshold values obtained responsive to the information obtained at the step S204. With respect to Fig. 8, the first device D1 belongs to spatial zone 2 and thus selects the threshold value T2 among T1, T2 and T3. In a variant, the first device D1 determines its distance from the second device D2 from information obtained at the step S204 and selects the threshold values responsive to this distance.

The distance may be calculated directly, based on geolocation data, or estimated by sensing. The signal level may be used to estimate the relative position and/or distance between the devices, using some additional information associated with the communication and obtained at the step S204 (e.g. about the propagation channel and direction of the interference signal arrival). In a first approximation, a classical link budget estimation based on the Friis formula may be used to calculate the attenuation of the signal level between two devices at a given distance R. It can be applied by D1 to estimate a distance to D2 based on the received signal (121). Indeed, the Friis formula is defined as follows:

$$P_r = \alpha P_t D_t D_r \left(\frac{\lambda}{4\pi R}\right)^2$$

where Dt and Dr are the antenna directivities along the line of sight (with respect to an isotropic radiator) of the transmitting (D2) and receiving (D1) antennas, respectively, $\lambda$ is the wavelength, R is the distance between the antennas, parameter $\alpha$ takes into account the factors affecting the radio channel properties, such as attenuation in the medium, antenna alignment, polarization, multipath, etc. Here, we further assume that $R >> \lambda$ such that both antennas are in the far field of each other, and the bandwidth is narrow enough that a single value for the wavelength $\lambda$ can be assumed. This formula thus makes it possible to calculate the power that is received by one antenna from another when transmitted from a distance R, and consequently the distance R can be estimated from received power in a reverse manner.

This embodiment based on the spatial zones works in the cases where the second device D2 is present and is not present. Indeed, the first device D1 may take a decision about frequency resource allocation to anticipate a future arrival of D2, e.g. defined by a time schedule or obtained from the network. For instance, a vehicle (acting as device D1) may thus anticipate a future need of a train (acting as device D2) for RR at the time of its arrival.

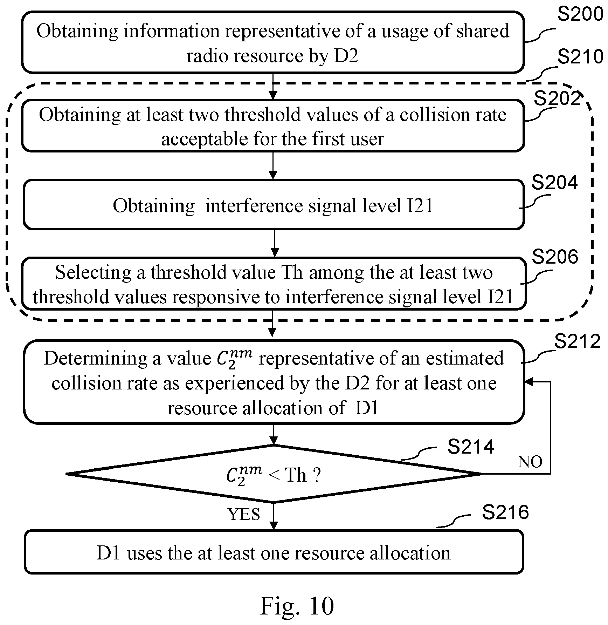

**Fig. 10** depicts a flowchart of a method for radio frequency resource allocation according to a third embodiment. The steps identical to the step of Fig. 2 are identified by the same numeral references and are not further disclosed.

The method according to this third embodiment comprises the steps S200 to S216. In this third embodiment, the step S210 comprises several steps as depicted in Fig. 10.

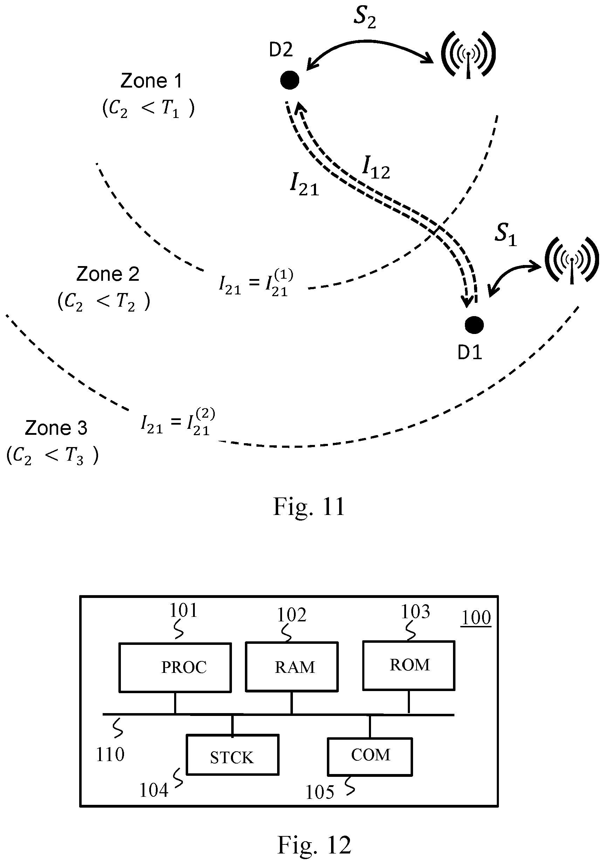

In a step S202, the first device D1 obtains at least two threshold values of a collision rate acceptable for the second device D2, each of the at least two threshold values being associated with a specific level of interference signal as illustrated in **Fig. 11.** The threshold values and associated level of interference zones may be obtained by the first device D1 from the second device D2, from pre-configuration data or from the network, etc (as already explained above). The information can be provided by D2 in real time, e.g. by broadcasting through a physical media or through the application layer. This embodiment based on the interference signal level requires the second device D2 to be effectively present.

The threshold values may be defined as a function of the interference signal levels as sensed by the first device D1 (i.e. I21). In this embodiment, the threshold values for D2 may be defined as follows:

If I21_min(j) < I21 < I21_max(j), then Threshold value is equal to T(j), where j is a number identifying a range of interference signal level.

The values of I21_min(j) and I21_max(j) are defined by D2 taking into account the worst scenario for the propagation channel conditions and D1 physical layer (i.e. directivity, pattern, max transmitted power, etc.). Indeed, when defining the thresholds D2 has limited or no information about D1 and thus has to consider a worst case (i.e. a case leading to a maximum level of interference signal).

In this embodiment, the first device D1 does not require to know its position nor its distance to D2. This information is already included in the definition of threshold values through the values of I21_min(j) and I21_max(j) defined by D2. Because of the reciprocity, the propagation channel conditions are the same in both directions. This makes it possible for D2 to predict a possible level of interference signal from D1 (i.e. I12) and to define threshold values accordingly.

In the step S204, the first device D1 obtains the level of interference signal $I_{21}$. In one embodiment, the level of interference signal $I_{21}$ is obtained by measurements possibly using some signal processing.

In the step S206, the first device D1 selects one threshold value Th among the at least two threshold values obtained at the step S202 responsive to the information obtained at the step S204.

The methods described above may comprise a feedback from the second device D2 to the first device D1 and/or to other devices using the same RR.

In one embodiment, the feedback mechanism can be used by D2 to notify D1 about the actual impact experienced by D2 due to D1. This makes it possible for D1 to adapt its use of the shared radio frequency resource accordingly. The feedback information provided by D2 to D1 may comprise new threshold values and/or new time interval dT2. Thus in one particular embodiment, the first device D1 receives new threshold values, said new threshold values being determined from the actual collision rate experienced by the second device because of the first device.

In another embodiment, the feedback mechanism can be used to anticipate a multi-device scenario. In particular, it may allow D2 to adapt its threshold value(s) in the case where the same RR is used by more than 2 devices. In one embodiment, a 3rd device D3 uses the same RR as D1 and D2. The threshold value(s) Th associated with D2 may be determined in order to guarantee that the cumulative impact of D1 and D3 on D2 (i.e. I12 +I32) meets the minimum requirements of D2.

The above methods may be used with devices D1 and D2 having an equal-right use of RR or with a device D1 (respectively D2) being a primary device and the device D2 (respectively D1) being a secondary device. In an extreme case, the threshold value(s) associated with the primary device may tend to a value corresponding to a case where the primary device is allowed to select any RA, regardless to the collision rate experienced by the secondary device. For example, to give advantage in RR use for a primary device, its threshold value for the collision rate may be set equal zero. After obtaining such a threshold value, the secondary device is obliged either to determine a RA that guarantees a collision-free use of the same RR or to avoid using this RR.

**Fig. 12** illustrates schematically an example of hardware architecture of the first device D1.

According to the example of hardware architecture shown in Fig. 10, the device D1 comprises, connected by a communication bus 110: a processor or CPU (acronym of "Central Processing Unit") 101; a random access memory RAM 102; a read only memory ROM 103; a storage unit or a storage medium reader such as an SD (acronym of "Secure Digital") card reader 104 or a HDD (acronym of "Hard Disk Drive"); and at least one set of communication interfaces COM 105 enabling the device D1 to transmit and receive data.

The processor 101 is capable of executing instructions loaded into the RAM 102 from the ROM 103, from an external memory (such as an SD card), from a storage medium (such as the HDD), or from a communication network (such as RAN1 or another communication network). When the device D1 is powered up, the processor 101 is capable of reading instructions from the RAM 102 and executing them. These instructions form a computer program causing the implementation, by the processor 101, of the method described in relation to Fig. 5 or 7.

The methods described in relation to Figs. 5 and 7 may be implemented in software form by the execution of the set of instructions by a programmable machine, for example a DSP (acronym of "Digital Signal Processor"), a microcontroller or a GPU (acronym of "Graphics Processing Unit"), or be implemented in hardware form by a machine or a dedicated component (chip or chipset), for example an FPGA (acronym of "Field-Programmable Gate Array") or an ASIC (acronym of "Application-Specific Integrated Circuit"). In general, the device D1 (identically for device D2) includes electronic circuitry adapted and configured for implementing the methods described in relation to Figs. 5 and 7.

## Claims

1. A method for allocating a radio frequency resource to a first device connected to a first radio access network, said radio frequency resource being shared between said first device and at least one second device connected to a second radio access network, **characterized in that** the method comprises the following steps executed by the first device:

   - obtaining (S200) information representative of a usage of said radio frequency resource by said second device;
   - obtaining (S210) a threshold value of a collision rate acceptable for the second device by obtaining at least a first threshold value and a second threshold value of a collision rate acceptable for the second device, said first and second threshold values each being associated with a spatial zone or a level of interference signal and selecting said one threshold value among said first and second threshold values;
   - determining (S212) a value representative of an estimated collision rate as experienced by the second device for at least one frequency resource allocation of the first device from the obtained information representative of the usage of said radio frequency resource by said second device;
   - using (S216) said at least one frequency resource allocation for the first device in the case where the determined value is below the obtained threshold value.

2. The method of claim 1, wherein said information representative of a usage of said radio frequency resource by said second device comprises a frequency resource allocation pattern and a value of a time interval related to collision rate estimation.

3. The method of claim 2, wherein determining a value representative of an estimated collision rate as experienced by the second device for at least one frequency resource allocation of the first device being defined by another frequency resource allocation pattern comprises mapping said frequency resource allocation pattern and said another frequency resource allocation pattern in order to obtain overlaps in frequency resource allocation during a time interval and determining the value by dividing the obtained overlaps by the overall time of usage of said radio frequency resource by said second device during said time interval, wherein said time interval is defined from said time interval related to collision rate estimation.

4. The method according to any one of claims 1 to 3, wherein said information representative of a usage of said radio frequency resource by said second device is obtained by the first device from said second device through application layer or physical layer, by sensing or from preconfigured data.

5. The method of claim 1 or 2, wherein determining a value representative of an estimated collision rate as experienced by the second device for at least one frequency resource allocation to the first device is determined from a database of preconfigured frequency resource allocation pattern, wherein said database associates with each possible combination of frequency resource allocation patterns an estimated collision rate for the first device and an estimated collision rate for the second device.

6. The method of claim 1, wherein selecting said one threshold value among said first and second threshold values comprises :

   - determining a location of said first device; and
   - selecting the threshold value responsive to said location.

7. The method of claim 1, wherein selecting said one threshold value among said first and second threshold values comprises:

   - determining a distance between said first device and said second device; and
   - selecting the threshold value responsive to said distance.

8. The method of claim 1, wherein selecting said one threshold value among said first and second threshold values :

   - determining a level of interference signal as sensed by the first device; and
   - selecting the threshold value responsive to said level of interference signal.

9. The method according to any one of claims 6 to 8, wherein said at least a first threshold value and a second threshold value of an acceptable collision rate for the second device are obtained by said first device from the network, from said second device through application or physical layer or from preconfigured data.

10. The method according to any one of claims 1 to 9, further comprising receiving new threshold values of a collision rate acceptable for the second device, said new threshold values being determined from the actual collision rate experienced by the second device because of the first device.

11. The method according to any one of claims 1 to 9, further comprising receiving new threshold values of a collision rate acceptable for the second device, said new threshold values being determined from the actual collision rate experienced by the second device because of the first device and at least a third device.

12. The method according to any one of claims 1 to 11, wherein the first and the second radio access networks implement different radio access technologies.

13. A device connected to a first radio access network, said device sharing a radio frequency resource with at least one second device connected to a second radio access network, **characterized in that** the device comprises:

   - means for obtaining information representative of a usage of said radio frequency resource by said second device;
   - means for obtaining a threshold value of a collision rate acceptable for the second device by obtaining at least a first threshold value and a second threshold value of a collision rate acceptable for the second device, said first and second threshold values each being associated with a spatial zone or a level of interference signal and selecting said one threshold value among said first and second threshold values;
   - means for determining a value representative of an estimated collision rate as experienced by the second device for at least one frequency resource allocation of the first device from the obtained information representative of the usage of said radio frequency resource by said second device;
- means for using said at least one frequency resource allocation for the first device in the case where the determined value is below the obtained threshold value.

14. A computer program product comprising program code instructions that can be loaded in a programmable device, the program code instructions causing implementation of the method according to any one of claims 1 to 12 when the program code instructions are run by the programmable device.

15. A non-transitory information storage medium storing a computer program comprising program code instructions, the program code instructions causing implementation of the method according to any one of claims 1 to 12 when the program code instructions are read from the non-transitory information storage medium and run by the programmable device.

**Patentansprüche**

1. Verfahren zur Zuweisung einer Funkfrequenzressource an ein erstes Gerät, das mit einem ersten Funkzugangsnetz verbunden ist, wobei die Funkfrequenzressource zwischen dem ersten Gerät und mindestens einem zweiten Gerät, das mit einem zweiten Funkzugangsnetz verbunden ist, geteilt wird, **dadurch gekennzeichnet, dass** das Verfahren die folgenden, von dem ersten Gerät ausgeführten Schritte umfasst:

- Erhalten (S200) von repräsentativen Informationen für eine Nutzung der Funkfrequenzressource durch das zweite Gerät;
- Erhalten (S210) eines Schwellenwerts einer für das zweite Gerät annehmbaren Kollisionsrate durch Erhalten mindestens eines ersten Schwellenwerts und eines zweiten Schwellenwerts einer für das zweite Gerät annehmbaren Kollisionsrate, wobei der erste und der zweite Schwellenwert jeweils einer räumlichen Zone oder einem Pegel eines Störsignals zugeordnet sind, und Auswählen des einen Schwellenwerts aus dem ersten und zweiten Schwellenwert;
- Bestimmen (S212) eines repräsentativen Wertes für eine geschätzte Kollisionsrate des zweiten Geräts bei mindestens einer Frequenzressourcenzuweisung des ersten Geräts, anhand der erhaltenen repräsentativen Informationen für die Nutzung der Funkfrequenzressource durch das zweite Gerät;
- Verwenden (S216) der mindestens einen Frequenzressourcenzuweisung für das erste Gerät bei Unterschreitung des Schwellenwerts durch den ermittelten Wert.

2. Verfahren nach Anspruch 1, bei dem die für eine Nutzung der Funkfrequenzressource durch das zweite Gerät repräsentativen Informationen ein Frequenzressourcenzuweisungsmuster und einen Wert für ein Zeitintervall für die Schätzung der Kollisionsrate umfassen.

3. Verfahren nach Anspruch 2, bei dem das Bestimmen eines repräsentativen Wertes für eine geschätzte Kollisionsrate des zweiten Geräts bei mindestens einer Frequenzressourcenzuweisung des ersten Geräts, die durch ein weiteres Frequenzressourcenzuweisungsmuster definiert ist, das Abbilden des Frequenzressourcenzuweisungsmusters und des weiteren Frequenzressourcenzuweisungsmusters umfasst, um Überlappungen bei der Frequenzressourcenzuweisung während eines Zeitintervalls zu erhalten, und das Bestimmen des Wertes durch Teilen der erhaltenen Überlappungen durch die Gesamtzeit der Nutzung der Funkfrequenzressource durch das zweite Gerät während des Zeitintervalls erfolgt, wobei das Zeitintervall anhand des Zeitintervalls für die Schätzung der Kollisionsrate definiert ist.

4. Verfahren nach einem der Ansprüche 1 bis 3, bei dem das erste Gerät die für eine Nutzung der Funkfrequenzressource durch das zweite Gerät repräsentativen Informationen über die Anwendungsschicht oder die physikalische Schicht, durch Erfassen oder aus vorkonfigurierten Daten von dem zweiten Gerät erhält.

5. Verfahren nach Anspruch 1 oder 2, bei dem das Bestimmen eines repräsentativen Wertes für eine geschätzte Kollisionsrate des zweiten Geräts bei mindestens einer Frequenzressourcenzuweisung an das erste Gerät anhand einer Datenbank vorkonfigurierter Frequenzressourcenzuweisungsmuster erfolgt, wobei in der Datenbank jeder möglichen Kombination von Frequenzressourcenzuweisungsmustern eine geschätzte Kollisionsrate für das erste Gerät und eine geschätzte Kollisionsrate für das zweite Gerät zugeordnet wird.

6. Verfahren nach Anspruch 1, bei dem das Auswählen des einen Schwellenwerts aus dem ersten und zweiten Schwellenwert Folgendes umfasst:

- Bestimmen eines Standorts des ersten Geräts; und
- Auswählen des Schwellenwerts in Abhängigkeit von diesem Standort.

**7.** Verfahren nach Anspruch 1, bei dem das Auswählen des einen Schwellenwerts aus dem ersten und zweiten Schwellenwert Folgendes umfasst:

- Bestimmen einer Entfernung zwischen dem ersten Gerät und dem zweiten Gerät; und
- Auswählen des Schwellenwerts in Abhängigkeit von dieser Entfernung.

**8.** Verfahren nach Anspruch 1, bei dem das Auswählen des einen Schwellenwerts aus dem ersten und zweiten Schwellenwert Folgendes umfasst:

- Bestimmen eines Pegels des Störsignals, das von dem ersten Gerät erfasst wird; und
- Auswählen des Schwellenwerts in Abhängigkeit von dem Pegel des Störsignals.

**9.** Verfahren nach einem der Ansprüche 6 bis 8, bei dem das erste Gerät zumindest einen ersten Schwellenwert und einen zweiten Schwellenwert einer annehmbaren Kollisionsrate für das zweite Gerät aus dem Netz, von dem zweiten Gerät über die Anwendungsschicht oder die physikalische Schicht oder aus vorkonfigurierten Daten erhält.

**10.** Verfahren nach einem der Ansprüche 1 bis 9, des Weiteren umfassend das Empfangen neuer Schwellenwerte einer für das zweite Gerät annehmbaren Kollisionsrate, wobei die Bestimmung der neuen Schwellenwerte anhand der tatsächlichen Kollisionsrate erfolgt, die beim zweiten Gerät aufgrund des ersten Geräts auftritt.

**11.** Verfahren nach einem der Ansprüche 1 bis 9, des Weiteren umfassend das Empfangen neuer Schwellenwerte einer für das zweite Gerät annehmbaren Kollisionsrate, wobei die Bestimmung der neuen Schwellenwerte anhand der tatsächlichen Kollisionsrate erfolgt, die beim zweiten Gerät aufgrund des ersten Geräts und mindestens eines dritten Geräts auftritt.

**12.** Verfahren nach einem der Ansprüche 1 bis 11, bei dem das erste und das zweite Funkzugangsnetz verschiedene Funkzugangstechnologien einsetzen.

**13.** Gerät, das mit einem ersten Funkzugangsnetz verbunden ist, wobei sich das Gerät eine Funkfrequenzressource mit mindestens einem zweiten Gerät teilt, das mit einem zweiten Funkzugangsnetz verbunden ist, **dadurch gekennzeichnet, dass** das Gerät Folgendes umfasst:

- Mittel zum Erhalten von für die Nutzung der Funkfrequenzressource durch das zweite Gerät repräsentativen Informationen;
- Mittel zum Erhalten eines Schwellenwerts einer für das zweite Gerät annehmbaren Kollisionsrate durch Erhalten mindestens eines ersten Schwellenwerts und eines zweiten Schwellenwerts einer für das zweite Gerät annehmbaren Kollisionsrate, wobei der erste und der zweite Schwellenwert jeweils einer räumlichen Zone oder einem Pegel eines Störsignals zugeordnet sind, und Auswählen des einen Schwellenwerts aus dem ersten und zweiten Schwellenwert;
- Mittel zum Bestimmen eines Wertes, der für eine geschätzte Kollisionsrate repräsentativ ist, wie sie beim zweiten Gerät bei mindestens einer Frequenzressourcenzuweisung des ersten Geräts auftritt, anhand der erhaltenen, für die Nutzung der Funkfrequenzressource durch das zweite Gerät repräsentativen Informationen;
- Mittel zur Verwendung der mindestens einen Frequenzressourcenzuweisung für das erste Gerät bei Unterschreitung des erhaltenen Schwellenwerts durch den ermittelten Wert.

**14.** Computerprogrammprodukt mit Programmcodeanweisungen, die in ein programmierbares Gerät geladen werden können, wobei die Programmcodeanweisungen bei ihrer Ausführung durch das programmierbare Gerät die Durchführung des Verfahrens nach einem der Ansprüche 1 bis 12 bewirken.

**15.** Speichermedium für nicht-übertragbare Informationen, auf dem ein Computerprogramm gespeichert ist, das Programmcodeanweisungen umfasst, wobei die Programmcodeanweisungen bei Auslesen aus dem Speichermedium für nicht-übertragbare Informationen und bei ihrer Ausführung durch das programmierbare Gerät die Durchführung des Verfahrens nach einem der Ansprüche 1 bis 12 bewirken.

**Revendications**

1. Procédé pour attribuer une ressource radiofréquence à un premier dispositif connecté à un premier réseau d'accès radio, ladite ressource radiofréquence étant partagée entre ledit premier dispositif et au moins un deuxième dispositif connecté à un deuxième réseau d'accès radio, **caractérisé en ce que** ce procédé comprend les étapes suivantes exécutées par le premier dispositif :

   - l'obtention (S200) d'informations représentatives d'une utilisation de ladite ressource radiofréquence par ledit deuxième dispositif ;
   - l'obtention (S210) d'une valeur de seuil d'un taux de collisions acceptable pour le deuxième dispositif en obtenant au moins une première valeur de seuil et une deuxième valeur de seuil d'un taux de collisions acceptable pour le deuxième dispositif, lesdites première et deuxième valeurs de seuil étant chacune associées à une zone spatiale ou à un niveau de signal d'interférence et la sélection de ladite une valeur de seuil parmi lesdites première et deuxième valeurs de seuil ;
   - la détermination (S212) d'une valeur représentative d'un taux de collisions estimé tel qu'éprouvé par le deuxième dispositif pour au moins une attribution de ressource de fréquence du premier dispositif à partir des informations obtenues représentatives de l'utilisation de ladite ressource radiofréquence par ledit deuxième dispositif ;
   - l'utilisation (S216) de ladite au moins une attribution de ressource de fréquence pour le premier dispositif dans le cas où la valeur déterminée est en dessous de la valeur de seuil obtenue.

2. Procédé selon la revendication 1, dans lequel lesdites informations représentatives d'une utilisation de ladite ressource radiofréquence par ledit deuxième dispositif comprennent un modèle d'attribution de ressource de fréquence et une valeur d'un intervalle de temps lié à une estimation du taux de collisions.

3. Procédé selon la revendication 2, dans lequel la détermination d'une valeur représentative d'un taux de collisions estimé tel qu'éprouvé par le deuxième dispositif pour au moins une attribution de ressource de fréquence du premier dispositif étant définie par un autre modèle d'attribution de ressource de fréquence comprend la mise en correspondance du modèle d'attribution de ressource de fréquence et dudit autre modèle d'attribution de ressource de fréquence afin d'obtenir des chevauchements dans l'attribution de ressource de fréquence pendant un intervalle de temps, et la détermination de la valeur en divisant les chevauchements obtenus par le temps total d'utilisation de ladite ressource radiofréquence par ledit deuxième dispositif pendant ledit intervalle de temps, ledit intervalle de temps étant défini à partir dudit intervalle de temps lié à une estimation du taux de collisions.

4. Procédé selon l'une quelconque des revendications 1 à 3, dans lequel les informations représentatives d'une utilisation de ladite ressource radiofréquence par ledit deuxième dispositif sont obtenues par le premier dispositif à partir dudit deuxième dispositif au moyen d'une couche d'application ou d'une couche physique, par détection ou à partir de données préconfigurées.

5. Procédé selon la revendication 1 ou 2, dans lequel la détermination d'une valeur représentative d'un taux de collisions estimé tel qu'éprouvé par le deuxième dispositif pour au moins une attribution de ressource de fréquence au premier dispositif est déterminée à partir d'une base de données de modèles d'attribution de ressource de fréquence, ladite base de données associant à chaque combinaison possible de modèles d'attribution de ressource de fréquence un taux de collisions estimé pour le premier dispositif et un taux de collisions estimé pour le deuxième dispositif.

6. Procédé selon la revendication 1, dans lequel la sélection de ladite une valeur de seuil parmi lesdites première et deuxième valeurs de seuil comprend :

   - la détermination d'un emplacement dudit premier dispositif ; et
   - la sélection de la valeur de seuil en fonction dudit emplacement.

7. Procédé selon la revendication 1, dans lequel la sélection de ladite une valeur de seuil parmi lesdites première et deuxième valeurs de seuil comprend :

   - la détermination d'une distance entre ledit premier dispositif et ledit deuxième dispositif ; et
   - la sélection de la valeur de seuil en fonction de ladite distance.

8. Procédé selon la revendication 1, dans lequel la sélection de ladite une valeur de seuil parmi lesdites première et deuxième valeurs de seuil comprend :

- la détermination d'un niveau de signal d'interférence tel que détecté par le premier dispositif ; et
- la sélection de la valeur de seuil en fonction dudit niveau de signal d'interférence.

**9.** Procédé selon l'une quelconque des revendications 6 à 8, dans lequel lesdites au moins une première valeur de seuil et une deuxième valeur de seuil d'un taux de collisions acceptable pour le deuxième dispositif sont obtenues par ledit premier dispositif à partir du réseau, à partir dudit deuxième dispositif au moyen d'une couche d'application ou d'une couche physique, ou à partir de données préconfigurées.

**10.** Procédé selon l'une quelconque des revendications 1 à 9, comprenant en outre la réception de nouvelles valeurs de seuil d'un taux de collisions acceptable pour le deuxième dispositif, lesdites nouvelles valeurs de seuil étant déterminées à partir du taux de collisions réel éprouvé par le deuxième dispositif à cause du premier dispositif.

**11.** Procédé selon l'une quelconque des revendications 1 à 9, comprenant en outre la réception de nouvelles valeurs de seuil d'un taux de collisions acceptable pour le deuxième dispositif, lesdites nouvelles valeurs de seuil étant déterminées à partir du taux de collisions réel éprouvé par le deuxième dispositif à cause du premier dispositif et d'au moins un troisième dispositif.

**12.** Procédé selon l'une quelconque des revendications 1 à 11, dans lequel les premier et deuxième réseaux d'accès radio mettent en oeuvre différentes technologies d'accès radio.

**13.** Dispositif connecté à un premier réseau d'accès radio, ledit dispositif partageant une ressource de fréquence radio avec au moins un deuxième dispositif connecté à un deuxième réseau d'accès radio, **caractérisé en ce que** ce dispositif comporte :

- des moyens pour obtenir des informations représentatives d'une utilisation de ladite ressource radiofréquence par ledit deuxième dispositif ;
- des moyens pour obtenir une valeur de seuil d'un taux de collisions acceptable pour le deuxième dispositif en obtenant au moins une première valeur de seuil et une deuxième valeur de seuil d'un taux de collisions acceptable pour le deuxième dispositif, lesdites première et deuxième valeurs de seuil étant chacune associées à une zone spatiale ou à un niveau de signal d'interférence et pour sélectionner ladite une valeur de seuil parmi lesdites première et deuxième valeurs de seuil ;
- des moyens pour déterminer une valeur représentative d'un taux de collisions estimé éprouvé par le deuxième dispositif pour au moins une attribution de ressource de fréquence du premier dispositif à partir des informations obtenues représentatives de l'utilisation de ladite ressource radiofréquence par ledit deuxième dispositif ;
- des moyens pour utiliser ladite au moins une attribution de ressource de fréquence pour le premier dispositif dans le cas où la valeur déterminée est en dessous de la valeur de seuil obtenue.

**14.** Progiciel comprenant des instructions de code de programme qui peuvent être chargées dans un dispositif programmable, les instructions de code de programme causant l'exécution du procédé selon l'une quelconque des revendications 1 à 12 lorsque les instructions de code de programme sont exécutées par le dispositif programmable.

**15.** Support de stockage d'informations non transitoire stockant un programme informatique comportant des instructions de code de programme, les instructions de code de programme causant l'exécution du procédé selon l'une quelconque des revendications 1 à 12 lorsque les instructions de code de programme sont lues depuis le support de stockage non transitoire d'information et exécutées par le dispositif programmable.

Fig. 1

Fig. 2

Fig. 3

Fig. 4

Obtaining information representative of a
usage of a shared radio resource by D2

S200

Obtaining a threshold value Th of a collision
rate acceptable for D2

S210

Determining a value $C_2^{nm}$ representative of an
estimated collision rate as experienced by D2
for at least one resource allocation of D1

S212

S214

$C_2^{nm} < \text{Th}$ ?

NO

YES

S216

D1 uses the at least one resource allocation

## Fig. 5

| m \ n | 1 | 2 | 3 | 4 | 5 | .. |
|---|---|---|---|---|---|---|
| 1 | $C_1^{11}$ $C_2^{11}$ | $C_1^{21}$ $C_2^{21}$ | $C_1^{31}$ $C_2^{31}$ | | | |
| 2 | $C_1^{12}$ $C_2^{12}$ | $C_1^{22}$ $C_2^{22}$ | | | | |
| 3 | $C_1^{13}$ $C_2^{13}$ | | | | | |
| .. | | | | | | |

## Fig. 6

```
┌─────────────────────────────────────────────────────────┐  S200
│  Obtaining information representative of a usage of shared │
│              radio resource by D2                          │  S210
└─────────────────────────────────────────────────────────┘
         │
   ┌─────┼───────────────────────────────────────────────┐  S202
   │ ┌───────────────────────────────────────────────────┐│
   │ │ Obtaining at least two threshold values of a       ││
   │ │  collision rate acceptable for the first user      ││
   │ └───────────────────────────────────────────────────┘│
   │         │                                             │
   │ ┌───────────────────────────────────────────────────┐│  S204
   │ │       Obtaining  geolocation data of D1            ││
   │ └───────────────────────────────────────────────────┘│
   │         │                                             │
   │ ┌───────────────────────────────────────────────────┐│  S206
   │ │ Selecting a threshold value Th among the at least  ││
   │ │ two threshold values responsive to geolocation     ││
   │ │ data of D1                                          ││
   │ └───────────────────────────────────────────────────┘│
   └─────────┼───────────────────────────────────────────┘
         │
┌─────────────────────────────────────────────────────────┐  S212
│ Determining a value $C_2^{nm}$ representative of an       │
│ estimated collision rate as experienced by the D2 for at  │◄──┐
│ least one resource allocation of D1                       │   │
└─────────────────────────────────────────────────────────┘   │
         │                                          S214        │
         ▼                                                  NO  │
      < $C_2^{nm} <$ Th ? > ───────────────────────────────────┘
         │ YES                              S216
         ▼
┌─────────────────────────────────────────────────────────┐
│        D1 uses the at least one resource allocation      │
└─────────────────────────────────────────────────────────┘
```

Fig. 7

Fig. 8

Fig. 9

S200

Obtaining information representative of a usage of shared radio resource by D2

S210

S202

Obtaining at least two threshold values of a collision rate acceptable for the first user

S204

Obtaining interference signal level I21

S206

Selecting a threshold value Th among the at least two threshold values responsive to interference signal level I21

S212

Determining a value $C_2^{nm}$ representative of an estimated collision rate as experienced by the D2 for at least one resource allocation of D1

S214

$C_2^{nm} <$ Th ?

NO

YES

S216

D1 uses the at least one resource allocation

Fig. 10

Fig. 11

Fig. 12

**EP 3 893 573 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017135998 A